**Europäisches Patentamt**

**European Patent Office**

**Office européen des brevets**

(11) Veröffentlichungsnummer: **0 281 668**
**A2**

(12) **EUROPÄISCHE PATENTANMELDUNG**

(21) Anmeldenummer: 87114476.2

(22) Anmeldetag: 03.10.87

(51) Int. Cl.⁴: **G01N 1/28**

(30) Priorität: 07.03.87 DE 3707398

(43) Veröffentlichungstag der Anmeldung:
14.09.88 Patentblatt 88/37

(84) Benannte Vertragsstaaten:
AT BE CH DE ES FR GB GR IT LI LU NL SE

(71) Anmelder: **Kulzer & Co. GmbH**
**Philipp-Reis-Strasse 8**
**D-6393 Wehrheim (TS.)1(DE)**

(72) Erfinder: **Beins, Wolfgang**
**Mussbachstrasse 23**
**D-6380 Bad Homburg(DE)**
Erfinder: **Röhrig, Helmut**
**Rauschpennstrasse 4**
**D-6390 Usingen 5(DE)**
Erfinder: **Salz, Ulrich, Dr.**
**Mühlbachstrasse 3**
**D-6393 Wehrheim 2(DE)**
Erfinder: **Gwinner, Lutz, Dr.**
**Rubensallee 99**
**D-6500 Mainz(DE)**
Erfinder: **Oppawsky, Steffen**
**Gartenfeldstrasse 22a**
**D-6380 Bad Homburg(DE)**

(74) Vertreter: **Heinen, Gerhard, Dr.**
**Heraeus Holding GmbH Heraeusstrasse**
**12-14**
**D-6450 Hanau am Main(DE)**

(54) Bestrahlungsgerät zum Photopolymerisieren von Kunststoff-Einbettmassen für histologische Präparate.

(57) Es ist ein Bestrahlungsgerät zum Photopolymerisieren von Kunststoff-Einbettmassen für histologische Präparate bekannt mit einer in einem Gehäuse angeordneten Präparate-Auflage und mehreren Bestrahlungslampen, wobei jeweils eine Bestrahlungslampe oberhalb der Präparate-Auflage und eine Bestrahlungslampe unterhalb der Präparate-Auflage angeordnet ein Bestrahlungslampenpaar bilden. Um ein solches Gerät derart auszubilden, daß es für die schonende Aushärtung von photopolymerisierbaren Einbettmassen geeignet ist, bei dem insbesondere ein abrupter Anstieg der Reaktionswärme vermieden wird und das mit einer geringen Anzahl an Bestrahlungslampen auskommt, ist die Präparate-Auflage als Drehteller ausgebildet mit mehreren im Bereich des Außenumfanges befindlichen lichtdurchlässigen Präparate-Auflagebereichen, sind die Bestrahlungslampen derart positioniert sind, daß im Betriebszustand die Präparate-Auflagebereiche zwischen jedem Bestrahlungslampenpaar nacheinander hindurchlaufen, und liegen die Zentren der Präparate-Auflagebereiche auf einem Kreis liegen, durch dessen Mittelpunkt die Drehachse des Drehtellers verläuft.

## "Bestrahlungsgerät zum Photopolymerisieren von Kunststoff-Einbettmassen für histologische Präparate"

Die Erfindung betrifft ein Bestrahlungsgerät zum Photopolymerisieren von Kunststoff-Einbettmassen für histologische Präparate, insbesondere für Gewebepräparate, mit einer in einem Gehäuse angeordneten Präparate-Auflage und mehreren Bestrahlungslampen, wobei jeweils eine Bestrahlungslampe oberhalb der Präparate-Auflage und eine Bestrahlungslampe unterhalb der Präparate-Auflage angeordnet ein Bestrahlungslampenpaar bilden.

Auf dem Gebiet der Histologie (Gewebelehre) werden mikroskopische Untersuchungen an Hart- und Weichgeweben durchgeführt. Unter "Histologie" wird auch eine analytische Verfahrenstechnik verstanden, um morphologische und histochemische Untersuchungen an entnommenen organischen und anorganischen Hart-und Weichgeweben durchführen zu können. Da die Untersuchungen unter dem Mikroskop an Dünnschnitten mit einer Schichtstärke von etwa 1 μm durchgeführt werden müssen, werden die zu untersuchenden Gewebeproben zunächst in ein Einbettmaterial eingegossen, um von dem eingegossenen Präparat dann einen Dünnschliff oder einen dünnen Schnitt anzufertigen. Alternativ zu einem in einem Medium eingebetteten Präparat werden auch Schnitte von tiefgefrorenen Weichgewebepräparaten angefertigt.

Zur Einbettung der Präparate werden Kunststoffe oder Harze verwendet, wie sie beispielsweise in der Produktinformation der Röhm GmbH, 6100 Darmstadt 1, unter der Überschrift "Plexit 55" (Plexit · = registriertes Warenzeichen), "Methacrylat-Einbett-Gießharz" (5/481/7093) beschrieben werden. Bei Plexit 55 handelt es sich um ein Gießharz von dickflüssiger Konsistenz, das durch Licht einer handelsüblichen Leuchtröhre zu einem festen, kristallklaren Körper erstarrt.

Neben der Einbettung der Gewebepräparaten in Kunststoffmassen oder Gießharzen ist eine weitere gängige Methode die Einbettung der Präparate in Paraffin.

Eine Problematik bei der Einbettung von Gewebepräparaten, insbesondere von Weichgewebepräparaten, ist die schonende Aushärtung der Einbettmaterialien unter geringer Wärme-und Blasenentwicklung, so daß während des Aushärtvorganges besonders bei Weichgewebepräparaten keine Gewebeveränderungen auftreten.

Die Anforderungen an ein solches Bestrahlungsgerät sowie ein entsprechendes Bestrahlungsgerät zum Photopolymerisieren von Kunststoff-Einbettmassen für solche histologische Präparate sind in dem Artikel "Einbettung von Knochen-präparaten in Plexit 55" von K. Ziebolz, veröffentlicht in der "Präparator 19, 99 - 106 (1973)" bzw. in dem Artikel "Anleitung zum Bau eines Beleuchtungsschrankes für die Polymerisation von Plexit 55" von K. Ziebolz, veröffentlicht in "Der Präparator 21, 5 - 7 (1975)" angegeben.

Bei dem bekannten Beleuchtungsschrank werden die auszuhärtenden, eingebetteten Gewebepräparate, die beispielsweise in eine Glasschale eingelegt sind, auf eine Arbeitsplatte aus Glas aufgesetzt. Oberhalb und unterhalb der Glasplatte befinden sich jeweils $2 \times 5$ Leuchtstoffröhren (Leistung 20 bis 60 W) paarig geschaltet. Die Glasplatte sowie die oberhalb der Glasplatte befindliche Leuchtstoffröhrenbatterie sind in der Senkrechten beweglich montiert, um den Abstand des einzubettenden Präparates zu den oberen und unteren Leuchtstoffröhren verändern zu können. Die Glasscheibe, auf denen die Kammern mit den einzubetteten Objekten aufgestellt werden, besitzt eine Dicke von ca. 10 bis 15 mm. Auf seiner Rückseite ist der Beleuchtungsschrank offen, damit die beim Aushärten entstehende Reaktionswärme sowie die Dämpfe abziehen können. Die bis zu fünf Lampengruppen können durch Schalter nach Bedarf ein- und ausgeschaltet werden. Da das Aushärten der beschriebenen Kunststoffe mit erheblicher Wärmeentwicklung verbunden ist, wird von Zeit zu Zeit das Licht so lange abgeschaltet, bis sich das Einbettmaterial abgekühlt hat. Zur Beobachtung der Wärmeentwicklung kann in dem Einbettmaterial ein Kontaktthermometer vorgesehen sein.

Ausgehend von dem vorstehend beschriebenen Stand der Technik liegt der Erfindung die Aufgabe zugrunde, ein Bestrahlungsgerät anzugeben, das für die schonende Aushärtung von polymerisierbaren Einbettmassen geeignet ist, bei dem insbesondere ein abrupter Anstieg der Reaktionswärme vermieden wird und das mit einer geringen Anzahl an Bestrahlungslampen auskommt.

Die Aufgabe wird dadurch gelöst, daß die Präparate-Auflage als Drehteller ausgebildet ist mit mehreren im Bereich des Außenumfanges befindlichen lichtdurchlässigen Präparate-Auflagebereichen, daß die Bestrahlungslampen derart positioniert sind, daß im Betriebszustand die Präparate-Auflagebereiche zwischen jedem Bestrahlungslampenpaar nacheinander hindurchlaufen, und daß die Zentren der Präparate-Auflagebereiche auf einem Kreis liegen, durch dessen Mittelpunkt die Drehachse des Drehtellers verläuft.

Durch den Drehteller ist es möglich, eine Vielzahl von Präparaten nacheinander an den Bestrahlungslampen vorbeizuführen. Dieser Drehteller besitzt lichtdurchlässige Präparate-Auflagebereiche, auf denen die auszuhärtenden Präparate aufgesetzt sind. Bevorzugt sind nur diese Auflagebereiche lichtdurchlässig, während der Drehteller ansonsten lichtundurchlässig ist, so daß die auszuhärtenden Präparate gezielt von den oberen und unteren Bestrahlungslampen bestrahlt werden können.

Um die Präparate sowohl von oben als auch von unten gleichmäßig aushärten zu können, ist jeder Bestrahlungslampe oberhalb des Drehtellers eine Bestrahlungslampe unterhalb des Drehtellers zugeordnet. Durch den sich drehenden Teller werden die Präparate nacheinander zwischen den einzelnen Bestrahlungslampenpaaren hindurchgeführt; den Präparaten kommt so zwischen den einzelnen Bestrahlungsphasen ausreichende Zeit zum Erholen im Sinne einer Abkühlung zu.

Zum Aushärten der Einbettmassen sind um den Umfang des Drehtellers verteilt mehrere Bestrahlungslampenpaare angeordnet, von denen vorzugsweise ein Bestrahlungslampenpaar eine dem Tageslicht entsprechende Strahlung aussendet, während die weiteren Bestrahlungslampenpaare, je nach Größe des Drehtellers bis zu vier solcher Bestrahlungslampenpaare, bevorzugt Blaulicht des sichtbaren Spektrums abgeben. Das dem Tageslicht entsprechende Strahlung abgebende Bestrahlungslampenpaar dient zur Vorpolymerisation der Einbettmassen (Angelieren), während die weiteren Bestrahlungslampenpaare die angelierten Einbettmassen aushärten.

In einer bevorzugten Ausführungsform bilden die Längsachsen der Bestrahlungslampenpaare, zumindest die der Endaushärtung dienenden Bestrahlungslampenpaare, Parallelen zu den Tangenten des Kreises, auf dem die Zentren der Präparate-Auflagebereiche umlaufen und dessen Zentrum mit der Drehachse des Drehtellers zusammenfällt. Durch diese Anordnung der Bestrahlungslampen, bei denen es sich um langgestreckte Leuchtstoffröhren mit einer Länge von 100 bis 200 mm handelt, wird die Strahlung der Lampe über annähernd ihrer gesamten Längserstreckung ausgenutzt. Die einzelnen Präparate-Auflagebereiche durchlaufen bei einer derartigen Anordnung der Bestrahlungslampe, wobei in einer vorteilhaften Anordnung die Längsachse einer jeden Bestrahlungslampe schräg zu dem Radius des Kreises verläuft, der die Längsachse der jeweiligen Bestrahlungslampe mittig ihrer Längserstreckung schneidet, zunächst einen Bereich der Bestrahlungslampe geringer Strahlungsintensität, der dem Lampenanfang bzw. dem Lampenende entspricht, bevor sie das Strahlungsmaximum der Bestrahlungslampenpaare in der Mitte erreichen; es werden auf diese Weise alle Temperaturen der Lampen durchlaufen. Von Bestrahlungslampenpaar zu Bestrahlungslampenpaar steigt zunächst die Strahlungsintensität langsam an, erfährt ihr Maximum und fällt dann wieder ab. Hieran anschließend durchläuft das auszuhärtende Präparat eine Ruhezone, in der die Einbettmasse abkühlt bevor sie im Bereich des folgenden Bestrahlungslampenpaares erneut bestrahlt wird. Die Präparate werden auf diese Weise in Intervallen bestrahlt, ohne daß hierzu die Bestrahlungslampen ausgeschaltet oder deren Intensität geregelt werden müssen. Abhängig von der Zahl der erforderlichen Bestrahlungsintervalle und der jeweiligen Bestrahlungszeiten kann eine entsprechende Anzahl an Bestrahlungslampenpaaren entlang des Drehtellers angeordnet werden. Eine zusätzliche Variation der Bestrahlungsdauer wird durch die Umlaufgeschwindigkeit des Drehtellers erreicht.

Besonders gut bewährt hat sich eine Anordnung der Bestrahlungslampenpaare derart, daß deren Längsachsen ein Vieleck oder den Teil eines Vielecks beschreiben. Bei dieser Ausrichtung der Lampen wird ein größt möglicher Bereich der Bestrahlungslampenlänge zur Betrahlung ausgenutzt. Zur gleichmäßigen Bestrahlung der Präparate von ihrer Ober-und Unterseite sind die jeweiligen Bestrahlungslampen eines Bestrahlungslampenpaares mit ihren Längs-Achsen derart positioniert, daß die Längs-Achsen in der Projektion in Richtung der Drehachse bzw. der Flächennormalen des Drehtellers gesehen deckungsgleich verlaufen.

Um die Masse des Drehtellers gering zu halten, wird dieser aus dünnem Plattenmaterial, bevorzugt in einer Stärke von 3 bis 5 mm, gefertigt. Die in solchen Geräten verwendbaren Drehteller können einen Druchmesser bis zu 500 mm besitzen. Um einen runden Lauf dieser Drehteller zu gewährleisten, wird er im Bereich seines Außenumfanges auf mindestens zwei am Gehäuse angeordneten Laufrollen geführt, wobei die mindestens zwei Laufrollen, bevorzugt jedoch vier Laufrollen, an zwei gegenüberliegenden Seiten des Drehtellers positioniert sind. Diese Laufrollen können hierbei in eine auf der Unterseite des Drehtellers umlaufende Ringnut eingreifen, wodurch einerseits eine gute Führung der Laufrollen gewährleistet wird und andererseits durch diese Ringnut, die in den plattenförmigen Drehteller als Sicke eingepreßt sein kann, der Drehteller an seinem Rand verstärkt wird.

Um den Drehteller auswechseln zu können, ist er auf eine Antriebswelle abnehmbar aufgesetzt. Das Ende der Antriebswelle dient gleichzeitig zur Zentrierung des Drehtellers. Eine einfache lösbare, aber dennoch kraftschlüssige Verbindung zwischen dem Drehteller und der Antriebswelle ergibt sich durch ein als Sechskant ausgebildetes Ende des Zentrierzapfens, das in eine entsprechende Zentriermulde an der Unterseite des Drehtellers eingreift. Darüber hinaus bringt ein solcher Sechskant den Vorteil mit sich, daß beim Einsetzen des Drehtellers in das Bestrahlungsgerät unabhängig von der Ausgangsstellung des Drehtellers der Drehteller maximal um einen Winkel von 60° verschwenkt werden muß, bis er kraftschlüssig auf dem Zentrierzapfen aufsitzt. Gegebenenfalls kann, um den erforderlichen Schwenkbereich des Drehtellers noch zu verkleinern, ein Zentrierzapfen mit mehr als sechs Kanten Verwendung finden.

Den einzelnen Bestrahlungslampen können Reflektoren zugeordnet sein, um die Lampenstrahlung auf die zu bestrahlenden Präparate zu richten. Bevorzugt bestehen die Reflektoren aus zwei planen Platten, die oberhalb der oberen Bestrahlungslampen und unterhalb der unteren Bestrahlungslampen der Bestrahlungslampenpaare angeordnet sind. Diese Reflektor-Platten schließen gleichzeitig den Bestrahlungsraum ab. Die obere Reflektor-Platte kann in vorteilhafter Weise gleichzeitig die Innenseite eines aufklappbaren, das Gehäuse verschließenden Deckels bilden, wobei bevorzugt an diesem Deckel gleichzeitig die oberen Bestrahlungslampen der Bestrahlungslampenpaare befestigt sind, so daß bei geöffnetem Deckel der Drehteller mit den darauf aufgesetzten Präparaten frei zugänglich ist.

Um das Bestrahlungsgerät hinsichtlich der unterschiedlichen einzubettenden Präparate und einer gezielten Bestrahlung variabel zu gestalten, sind die Präparate-Auflagebereiche Aussparungen im Drehteller, in die jeweils eine napfförmige Einbettform aus lichtdurchlässigem Material eingesetzt ist. Hierdurch können unterschiedliche Einbettformen in den Drehteller eingesetzt werden, die aus lichtdurchlässigem Material bestehen, während der Drehteller lichtundurchlässig ist. Außerdem kann durch eine solche Ausgestaltung des Bestrahlungsgerätes der Präparator die einzelnen Einbettformen mit den Präparaten vorbereiten und sie anschließend für die Bestrahlung auf einem Drehteller zusammenstellen.

Bevorzugt weisen die Aussparungen im Drehteller und damit auch die einzusetzenden Einbettformen eine runde oder ovale Außenkontur auf, wodurch sich eine stabile Form die Einbettform ergibt. Um die Einbettform, die etwa eine Höhe von 5 bis 15 mm besitzt, mittig der Hauptebene des Drehtellers auszurichten, ist der Rand der Aussparungen von der Oberseite des Drehtellers vorstehend ausgebildet, auf dem die jeweilige Einbettform mit einem Rand, der sich an dessen Seitenwand anschließt, aufliegt. Durch die Randausbildung der Aussparungen des Drehtellers wird der Drehteller in seinem Außenbereich gleichzeitig verstärkt, ohne daß hierzu zusätzliche Maßnahmen erforderlich wären. Außerdem wird hierdurch ein Überlaufrand gebildet, so daß eventuell aus der Einbettform auslaufendes Einbettmaterial aufgegangen wird.

Eine besonders sichere Lage und gleichzeitig Zentrierung der Einbettform in der Aussparung des Drehtellers wird dadurch erreicht, daß jede Einbettform einen zu seiner Unterseite hin umgelegten Rand aufweist, der den vorstehenden Rand der Aussparung übergreift. In einer bevorzugten Ausführung schließt sich an den Rand der Einbettform eine Rinne an, die einerseits die Funktion des erwähnten umgelegten Randes übernehmen kann und andererseits dazu dient, aus dem Napfbereich übertretendes Einbettmaterial aufzufangen. Hierdurch wird gleichzeitig eine von Einbettform zu Einbettform gleiche Menge bzw. Einfüllhöhe der eingefüllten Einbettmasse gewährleistet. Im ausgehärteten Zustand kann das in die Rinne übergelaufene Material in einfacher Weise abgebrochen werden.

Falls der äußere Rinnenrand den inneren Rinnenrand in seiner Höhe überragend ausgebildet ist, ist ein erleichtertes Greifen und Einsetzen die Einbettform in die Aussparungen des Drehtellers gegeben.

Die Wanddicke des Bodens der Einbettform liegt bevorzugt im Bereich von 0,5 bis 1 mm.

Um ein leichtes Herausdrücken der ausgehärteten Einbettmasse aus den Einbettformen zu ermöglichen, sind die an den Boden der Einbettform angrenzenden Seitenflächen nach außen geneigt, so daß sich die die Einbettmasse aufnehmende Wanne zu ihrer Öffnung hin erweitert. Als ausreichend hat sich hierbei ein Neigungswinkel der Seitenflächen zu der auf dem Boden der Einbettform stehenden Lotrechten von 5 bis 30° erwiesen.

Falls in dem Drehteller sehr große Aussparungen vorgesehen sind, die größere sind als die mittleren Abmessungen die unterschiedlichen Einbettformen oder, falls in die Aussparungen Einbettformen unteschiedlicher Außenkontur eingesetzt werden sollen, kann ein Adapter in Form beispielsweise eines Ringelementes in die Aussparung eingesetzt werden, auf dessen innerem Rand dann die jeweilige Einbettform aufliegt. Vorzugsweise wird dieser Adapter aus lichtundurchlässigem Material gefertigt.

Bevorzugt wird die Einbettform aus Acrylglas oder Polyvinylchlorid gefertigt. Damit das ausgehärtete Einbettmaterial leicht der Einbettform zu entnehmen ist, wird zumindest die Innenseite des Bodens, bevorzugt auch zusätzlich die Innenseiten der an den Boden angrenzenden Seitenwände, mit einer Trennschicht überzogen. Gut bewährt hat sich eine Trennschicht in Form einer dünnen Polyethylen-Folie, die eine Dicke von 5 - 50 $\mu$m aufweisen soll. Diese Folie ist in Form einer Schutzfolie über die mit dem Einbettmaterial in Berührung kommenden Bereiche der Einbettform gezogen.

Weitere Einzelheiten und Merkmale der Erfindung ergeben sich aus der nachfolgenden Beschreibung eines Ausführungsbeispiels anhand der Zeichnung. In der Zeichnung zeigt:

Figur 1 eine perspektivische Ansicht eines Bestrahlungsgerätes,

Figur 2 einen in das Bestrahlungsgerät nach Figur 1 eingesetzten Drehteller,

Figur 3 einen Längsschnitt durch das Bestrahlungsgerät im Bereich der Antriebswelle,

Figur 4 ein in das Bestrahlungsgerät eingesetztes Lampenabdeckblech mit einer Bestrahlungslampenanordnung,

Figur 5 eine vergrößerte Schnittdarstellung des auf einen Antriebszapfen aufgesetzten Drehtellers,

Figur 6 eine Draufsicht auf eine erfindungsgemäß ausgestalteten Einbettform,

Figur 7 einen Schnitt entlang der Schnittlinie VII-VII der Figur 6,

Figur 8 eine Einbettform für zwei Präparate,

Figur 9 einen Längsschnitt entlang der Schnittlinie IX-IX in Figur 8,

Figur 10 einen Querschnitt entlang der Schnittlinie X-X in Figur 8 und

Figur 11 einen Querschnitt durch den Drehteller entlang der Schnittlinie XI-XI in Figur 2 mit einer darin eingesetzten Einbettform, wie er in den Figuren 6 und 7 gezeigt ist.

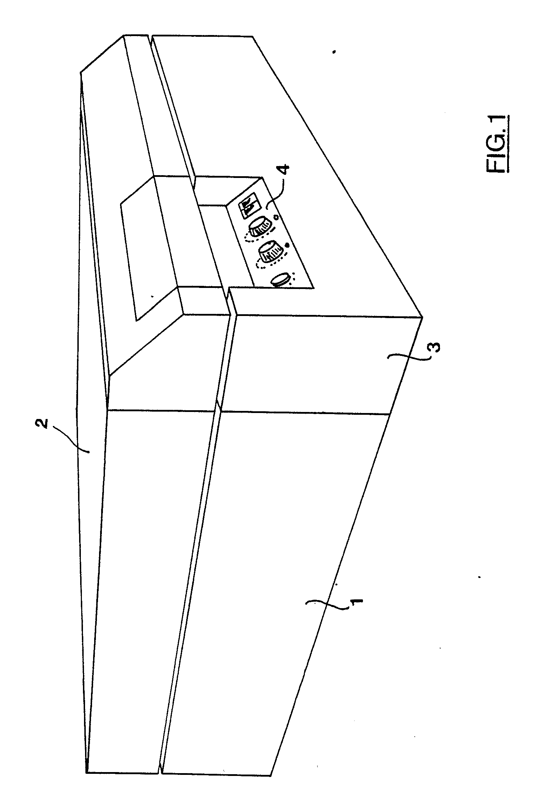

Das Bestrahlungsgerät weist, wie in Figur. 1 gezeigt ist, ein flaches Gehäuse 1 auf, das mit einem Deckel 2 verschlossen ist. An der Frontseite des Gehäuses 1 schließt sich ein Bedienungs-und Versorgungsteil 3 an. Der Deckel 2 ist derart ausgebildet, daß er das Bedienungs-und Versorgungsteil 3 überdeckt. In diesem Bedienungs-und Versorgungsteil 3 befindet sich eine Mulde 4, in der Netzschalter sowie die Bedienungselemente für ein Zeitschaltgerät gut zugänglich angeordnet sind.

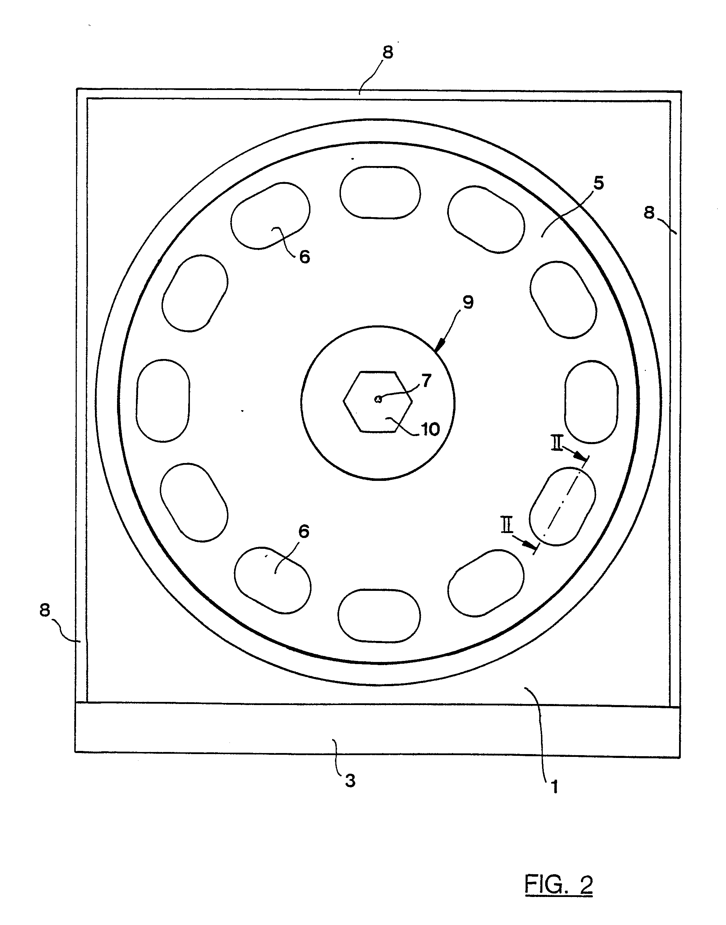

In das Gehäuse 1 ist ein Drehteller 5 eingesetzt (siehe Figur 2) in Form einer Scheibe, im Bereich dessen Außenumfanges mehrere Präparate-Auflagen vorgesehen sind, die durch Aussparungen 6 im Drehteller 5 gebildet werden. Die Zentren dieser Aussparungen 6 oder Präparate-Auflagebereiche liegen auf einem Kreis, dessen Mittelpunkt durch die Drehachse 7 des Drehtellers 5 verläuft. Das Gehäuse 1 ist derart dimensioniert, daß der Drehteller 5 unmittelbar an die Gehäuseseitenwände 8 angrenzt. Der Drehteller 5 besitzt einen Mittelteil 9 mit einer Zentriermulde 10.

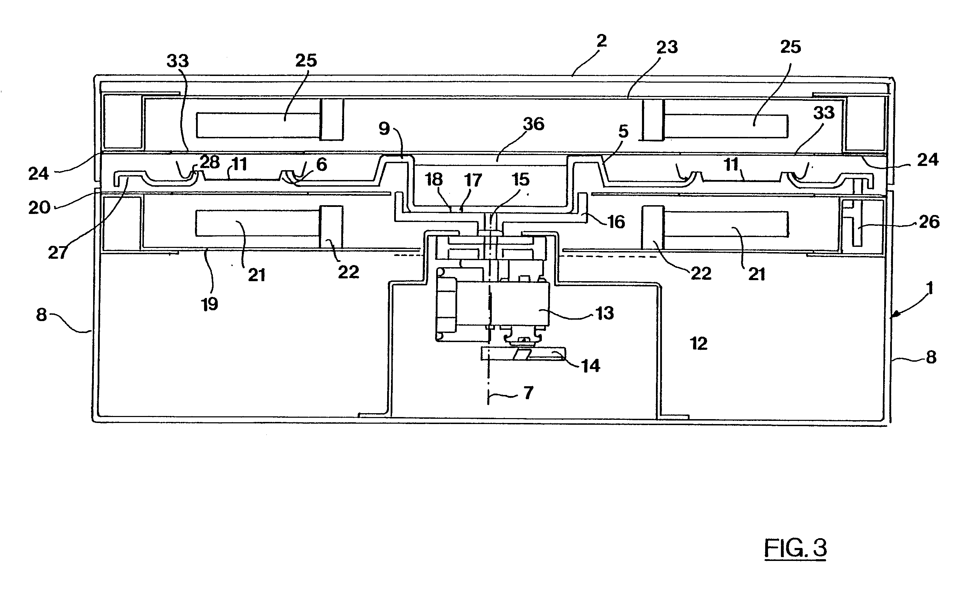

Der in Figur 2 gezeigte Drehteller 5 ist im Bereich seines Außenumfanges mit zwölf Aussparungen 6 versehen, die, wie der Figur 3 zu entnehmen ist, jeweils durch eine Einbettform 11 abgedeckt werden. In der Mitte des Gehäuses 1 befindet sich ein in einem Zwischengehäuse 12 angeordneter Antriebsmotor 13. Bei dem Antriebsmotor 13 handelt es sich um einen Getriebemotor mit einem angeflanschten Lüfterrad 14. An die Antriebswelle 15 des Antriebsmotors 13 ist bei der Ausführung nach Figur 3 eine Mitnehmerscheibe 16 aufgesetzt, auf der das Mittelteil 9 des Drehtellers 5 aufliegt. Der Drehteller 5 wird über die Mitnehmerscheibe 16 durch einen Zapfen 17, der in eine Bohrung 18 in dem Mittelteil 9 des Drehtellers 5 eingreift, mitgenommen.

In dem Gehäuse 1 sind voneinander beabstandet ein unterer Reflektor 19, der aus einem flachen Blech mit einer reflektierenden Oberseite besteht, und ein unteres Lampenabdeckblech 20 angeordnet. Zwischen dem unteren Reflektor 19 und dem Lampenabdeckblech 20 befinden sich mehrere untere Bestrahlungslampen 21, die über Sockel 22 an dem unteren Reflektor 19 gehalten sind.

Im Deckel 2 des Bestrahlungsgerätes ist spiegelbildlich zum Aufbau der Bestrahlungseinheit im Gehäuse 1 ein oberer Reflektor 23 sowie ein oberes Lampenabdeckblech 24 montiert, zwischen denen sich oberere Bestrahlungslampen 25 befinden, die an dem oberen Reflektor 23 befestigt sind. Jeweils eine untere Bestrahlungslampe 21 und eine obere Bestrahlungslampe 25 sind mit ihren Achsen derart zueinander ausgerichtet, daß die Längs-Achsen 29 der Lampen in der Projektion von der Oberseite des Bestrahlungsgerätes aus gesehen deckungsgleich sind und ein Bestrahlungslampenpaar bilden. Zwischen dem unteren Lampenabdeckblech 20 und dem oberen Lampenabdeckblech 24 wird der Drehteller 5 hindurchgeführt. Der Drehteller 5, der einen Durchmesser von 500 mm hat, wird an seinem Rand durch mehrere am Umfang verteilt angeordnete Laufrollen 26 geführt, die in eine Ringnut 27 an der Unterseite des Drehtellers 5 eingreifen. Durch diese Ringnut 27 wird gleichzeitig der aus einer dünnen Kunststoffplatte tiefgezogene Drehteller 5 an seinem Rand verstärkt. Die Dicke des Drehtellers 5 beträgt zumindest im Bereich der Aussparungen 6 etwa 3 bis 5 mm. Der Rand 28 der Aussparungen 6 steht über die Oberseite des Drehtellers 5 vor. Auf diesem Rand 28 liegen die Einbettformen 11 auf, so daß sie gegen ein Verrutschen gesichert sind.

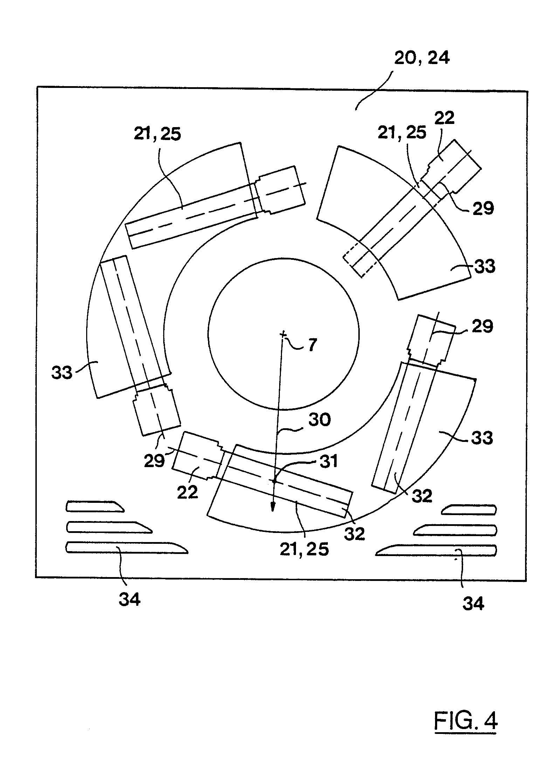

Das Bestrahlungsgerät ist, wie Figur 4 zeigt, mit fünf Bestrahlungslampenpaaren bestückt, von denen die Sockel 22 durch das obere bzw. untere Lampenabdeckblech 20, 24 abgedeckt werden. Von den fünf Bestrahlungslampenpaaren gibt ein Bestrahlungslampenpaar, im gezeigten Beispiel dasjenige, das mit den Längs-Achsen 29 der Bestrahlungslampen zur Drehachse 7 des Drehtellers 5 hin ausgerichtet ist, ein dem Tageslicht entsprechendes Strahlenspektrum ab. Die Bestrahlungslampen der vier anderen Bestrahlungslampenpaare 22 sind Leuchtstoffröhren, die vorwiegend blaues Licht aussenden.

Als Tageslichtlampen sind beispielsweise Lampen der Firma Osram mit der Bezeichnung "DULUX 7 W/41 Lumilux" und als Blaulichtlampen Lampen mit der Bezeichnung "DULUX 9 W/71 Blue" eingesetzt.

Die das Blaulicht aussendenden Bestrahlungslampen 21, 25 bilden einerseits Tangenten zu dem Kreis, auf dem die Zentren der Präparate-Auflagebereiche (Aussparungen 6) umlaufen. Zusätzlich sind sie derart ausgerichtet, daß der Radius 30, der die Längs-Achse 29 der jeweiligen Bestrahlungslampe 21, 25 mittig schneidet, an der unteren Bestrahlungslampe 21, 25 durch den Schnittpunkt 31 angedeutet, schräg zu dem Radius 30 des Kreises verläuft. Von den vier Bestrahlungslampenpaaren 21, 25 sind jeweils zwei dieser Paare mit ihren Lampenenden 32 einander zugekehrt. Die vier - schräg zueinander ausgerichteten Bestrahlungslampen 21, 25 der oberen und unteren Lampenebene bilden mit ihren Achsen ein Vieleck. Durch die Lampenanordnung ergeben sich drei Bestrahlungsfelder mit entsprechenden Öffnungen 33 in dem unteren und oberen Lampenabdeckblech 20, 24. Durch die Anordnung der Bestrahlungslampen 21, 25 mit schräg gegeneinander ausgerichteten Längs-Achsen 29 wird eine schonende Aushärtung der Einbettmaterialien, die durch Drehen des Drehtellers 5 die einzelnen Bestrahlungslampenpaare nacheinander durchlaufen, erzielt. Da die langgestreckten Bestrahlungslampen über ihre Länge eine unterschiedliche Strahlintensität mit einem Maximum im Mittelbereich besitzen, erfahren die vorbeigeführten Einbettmaterialien zunächst einen Strahlungsanstieg, der zum gegenüberliegenden Lampenende hin wieder abfällt mit einer Ruhezone zwischen jeweils benachbarten Bestrahlungslampenpaaren. Die Einbettmaterialien werden auf diese Weise in Intervallen bestrahlt. Da die das Tageslicht aussendenden Bestrahlungslampen 21, 25 lediglich zum Angelieren der Einbettmaterialien dienen, können sie mit ihren Längs-Achsen 29 zur Drehachse 7 hin weisend, wie in Figur 4 dargestellt, ausgerichtet werden. Um zwischen den Lampenabdeckblechen 20, 24 und den Reflektoren 19, 23 entstehende Wärme abzuführen, sind in den Lampenabdeckblechen 20, 2· nehrere Lüftungsschlitze 34 vorhanden.

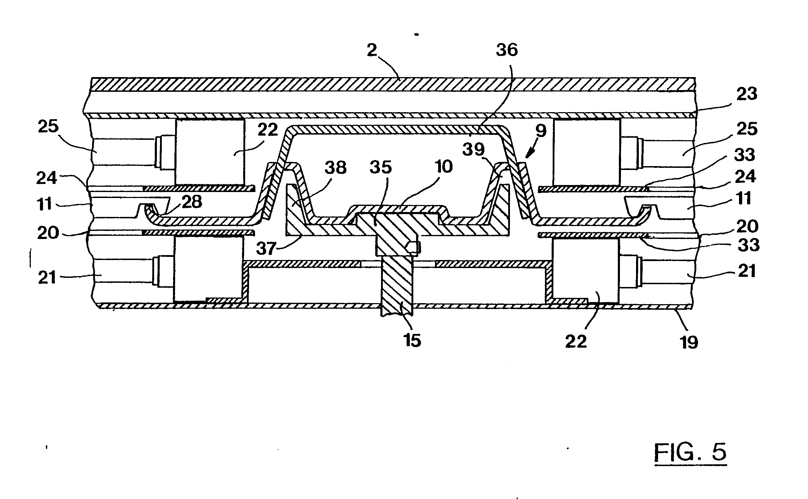

Wie die Figuren 2 und 5 zeigen, ist der Drehteller 5 lösbar auf die Antriebswelle 15, die an ihrem freien Ende einen Zentrierzapfen 35 besitzt, aufgesetzt. Zur leichteren Handhabung des Drehtellers 5 ist im Bereich des Mittelteiles 9 ein Griff 36 befestigt. Der Zentrierzapfen 35 ist als Sechskant ausgebildet, der kraftschlüssig in die entsprechend ausgebildete Zentriermulde 10 eingreift. Um einen aus dem Bestrahlungsgerät herausgenommenen Drehteller 5 leichter einsetzen zu können, ist zusätlich an dem Zentrierzapfen 35 ein Ringelement 37 befestigt mit einem umlaufenden Steg 38, der eine schräge Seitenfläche auf seiner Innenseite besitzt. Durch eine diesem umlaufenden Steg 38 angepaßte Nut 39 im Mittelteil 9 des Drehtellers 5 wird der Drehteller 5 beim Einsetzen geführt und gleichzeitig in seiner Lage stabilisiert. Nachdem der Drehteller 5 auf das Ringelement 37 aufgesetzt ist, wird er, bei einem als Sechskant ausgebildeten Zentrierzapfen 35, aus der ungünstigsten Stellung um maximal 60° gedreht, bis er auf dem Zentrierzapfen 35 einrastet.

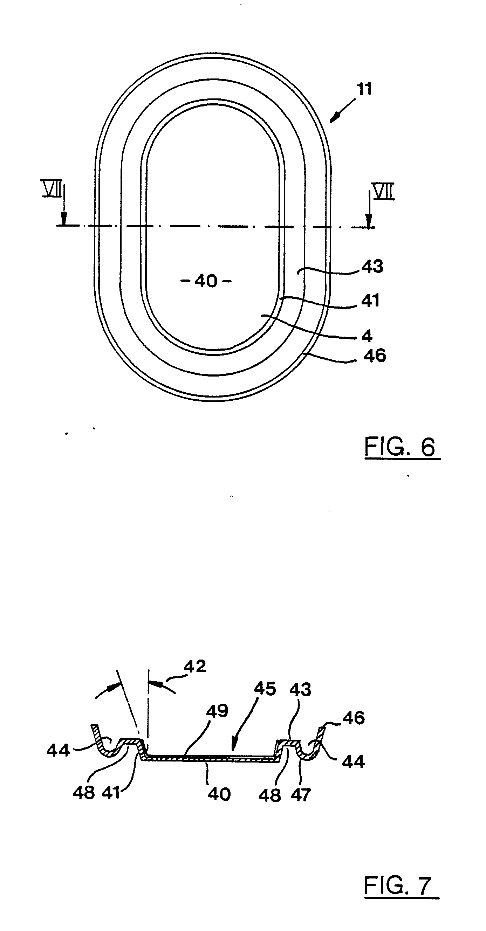

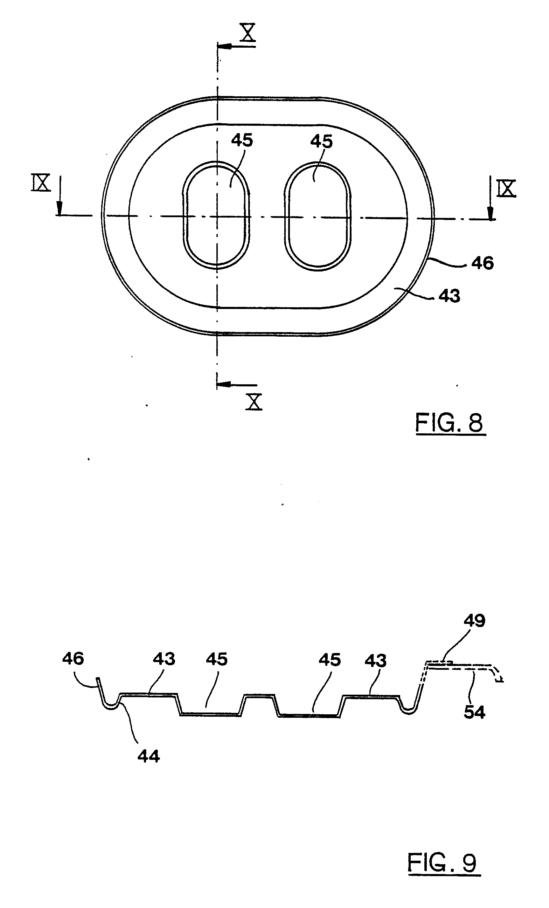

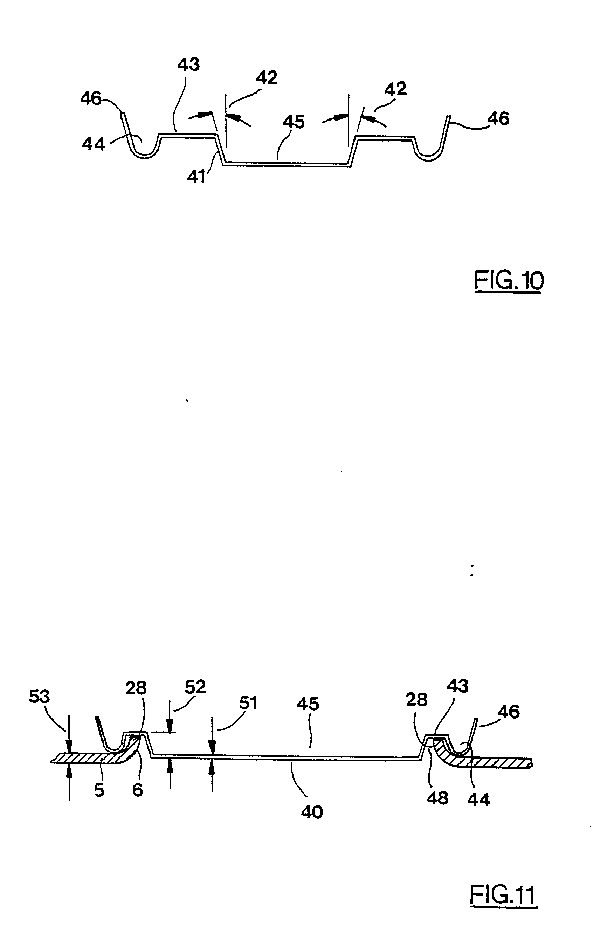

Die in die Aussprungen 6 des Drehtellers 5 eingesetzten Einbettformen 11 besitzen in den gezeigten Beispielen eine ovale Form mit einem Boden 40, an den sich nach außen geneigte Seitenflächen 41 anschließen. Die Neigung dieser Seitenflächen 41, durch den Winkel 42 in den Figuren 7 und 10 angedeutet, beträgt 25°. An den Rand dieser Seitenflächen 41 schließt sich eine waagrecht verlaufende Fläche 43 an, an die eine umlaufende Rinne 44 angesetzt ist. Diese umlaufende Rinne 44 dient dazu, in den napfförmigen Bereich 45 eingefülltes, überlaufendes Einbettmaterial aufzunehmen, so daß von Einbettform zu Einbettform eine annähernd gleiche Dicke des ausgehärteten Einbettmaterials gewährleistet ist. Der äußere Rinnenrand 46 überragt den inneren Rinnenrand 47; durch diesen vorstehenden äußeren Rinnenrand 46 kann die Einbettform 11 leicht mit zwei Fingern erfaßt werden; außerdem gewährleistet dieser hochgezogene äußere Rinnenrand 46, daß kein Einbettmaterial aus der Einbettform 11 ausläuft. In die durch die Seitenflächen 41, die waagrechte Fläche 43 und den inneren Rinnenrand 47 gebildete Vertiegung 48 setzt sich, wie Figur 11 zeigt, der über die Oberseite des Drehtellers 5 vorstehende Rand 28 der Aussparungen 6 ein. Über den in die Vertiefung 48 eingreifenden Rand 28 der Aussparung 6 wird die jeweilige Einbettform 11 zentriert. Im Gegensatz zu der Einbettform nach den Figuren 6 und 7 weist die Einbettform nach den Figuren 8 bis 11 zwei napfförmige Bereiche 45, in denen jeweils ein zu untersuchendes Präparat eingebettet werden kann, auf.

In Figur 9 ist an den äußeren Rinnenrand 46 eine zusätzliche Auflagefläche 49, durch unterbrochene Linien angedeutet, angesetzt, die, im Gegensatz zu der in Figur 11 gezeigten Ausführungsform, als Auflagerand entsprechend der waagrechten Fläche 43 dienen kann.

Die Einbettformen 11 bestehen aus Acrylglas oder Polyvinylchlorid mit einer zusätzlichen dünnen Polyethylen-Folie als Trennschicht 50 (siehe Figur 7), um das ausgehärtete Einbettmaterial leicht der Einbettform 11 entnehmen zu können.

Die Dicke 51 (Figur 11) der Einbettform 11 beträgt zumindest im Bereich seines Bodens 40 etwa 0,8 mm, die Höhe 52 der Einbettform 11 liegt bei 8 mm. Der Drehteller 5 weist zumindest im Bereich der Aussparungen 6 eine Dicke 53 von 4 mm auf.

Die in Figur 9 angedeutete Auflagefläche 49 kann auch als Auflagefläche für einen Adapter-Ring 54 dienen, der seinerseits dann auf den Rand 28 der Aussparung 6 des Drehtellers 5 aufgesetzt wird. Hierdurch ist eine weite Variationsmöglichkeit der Abmessungen der einzelnen Einbettformen gerade im Hinblick auf sehr kleine einzubettende Präparate gegeben.

## Ansprüche

1. Bestrahlungsgerät zum Photopolymerisieren von Kunststoff-Einbettmassen für histologische Präparate, insbesondere für Gewebepräparate, mit einer in einem Gehäuse angeordneten Präparate-Auflage und mehreren Bestrahlungslampen, wobei jeweils eine Bestrahlungslampe oberhalb der Präparate-Auflage und eine Bestrahlungslampe unterhalb der Präparate-Auflage angeordnet ein Bestrahlungslampenpaar bilden, dadurch gekennzeichnet, daß die Präparate-Auflage als Drehteller (5) ausgebildet ist mit mehreren im Bereich des Außenumfanges befindlichen lichtdurchlässigen Präparate-Auflagebereichen, daß die Bestrahlungslampen (21, 25) derart positioniert sind, daß im Betriebszustand die Präparate-Auflagebereiche zwischen jedem Bestrahlungslampenpaar (21, 25) nacheinander hindurchlaufen, und daß die Zentren der Präparate-Auflagebereiche auf einem Kreis liegen, durch dessen Mittelpunkt die Drehachse (7) des Drehtellers (5) verläuft.

2. Bestrahlungsgerät nach Anspruch 1, dadurch gekennzeichnet, daß die Längs-Achsen (29) der Bestrahlungslampenpaare (21, 25) Parallelen zu den Tangenten des Kreises bilden.

3. Bestrahlungsgerät nach Anspruch 1 oder 2, dadurch gekennzeichnet, daß die Längs-Achse (29) einer jeden Bestrahlungslampe (21, 25) schräg zu dem Radius (30) des Kreises verläuft, der diese Achse (29) der jeweiligen Bestrahlungslampe (21, 25) mittig ihrer Längserstreckung schneidet.

4. Bestrahlungsgerät nach Anspruch 3, dadurch gekennzeichnet, daß mindestens drei Bestrahlungslampenpaare (21, 25) vorgesehen sind, deren Längs-Achsen (29) ein Vieleck beschreiben.

5. Bestrahlungsgerät nach Anspruch 3, dadurch gekennzeichnet, daß mindestens drei Bestrahlungslampenpaare (21, 25) vorgesehen sind, deren Längs-Achsen (29) einen Teil eines Vielecks beschreiben.

6. Bestrahlungsgerät nach einem der Ansprüche 1 bis 5, dadurch gekennzeichnet, daß die Längs-Achsen (29) jedes Bestrahlungslampenpaares (21, 25) in der Projektion in Richtung der Drehachse (7) deckungsgleich verlaufen.

7. Bestrahlungerät nach einem der Ansprüche 1 bis 6, dadurch gekennzeichnet, daß der Drehteller (5) im Bereich seines Außenumfanges auf mindestens zwei, bevorzugt vier, am Gehäuse (1) angeordneten Laufrollen (26) geführt ist, wobei die mindestens zwei Laufrollen (26) an zwei gegenüberliegenden Seiten des Drehtellers (5) positioniert sind.

8. Bestrahlungsgerät nach Anspruch 6 und 7, dadurch gekennzeichnet, daß die Laufrollen (26) in eine am Außenumfang des Drehtellers (5) auf dessen Unterseite umlaufende Ringnut (27) eingreifen.

9. Bestrahlungsgerät nach einem der Ansprüche 1 bis 8, dadurch gekennzeichnet, daß der Drehteller (5) an einer Antriebswelle (15), deren freies Ende als Zentrierzapfen (35) ausgebildet ist, kraftschlüssig gelagert ist.

10. Bestrahlungsgerät nach Anspruch 9, dadurch gekennzeichnet, daß der Zentrierzapfen (35) ein Sechskant ist, der in eine Zentriermulde (10) in der Unterseite des Drehtellers (5) eingreift.

11. Bestrahlungsgerät nach einem der Ansprüche 1 bis 10, dadurch gekennzeichnet, daß den Bestrahlungslampen (21, 25) Reflektoren (19, 23) zugeordnet sind.

12. Bestrahlungsgerät nach Anspruch 11, dadurch gekennzeichnet, daß der Reflektor (19, 23) als plane Platte ausgebildet ist.

13. Bestrahlungsgerät nach Anspruch 11 oder 12, dadurch gekennzeichnet, daß der Reflektor oder die Reflektoren (19, 23) die Innenseite eines aufklappbaren Deckels (2) bilden.

14. Bestrahlungsgerät nach einem der Ansprüche 1 bis 13, dadurch gekennzeichnet, daß die Präparate-Auflagebereiche Aussparungen (6) im Drehteller (5) sind, in die jeweils eine napfförmige Einbettform (11) aus lichtdurchlässigem Material eingesetzt ist.

15. Bestrahlungsgerät nach Anspruch 13, dadurch gekennzeichnet, daß die Aussparungen (6) im Drehteller (5) eine runde oder ovale Außenkontur aufweisen.

16. Bestrahlungsgerät nach Anspruch 3 oder 4, dadurch gekennzeichnet, daß der Rand (28) der Aussparungen (6) über die Oberseite des Drehtellers (5) vorsteht.

17. Bestrahlungsgerät nach Anspruch 16, dadurch gekennzeichnet, daß jede Einbettform (11) einen zu seiner Unterseite umgelegten Rand (43, 47) aufweist, der den vorstehenden Rand (28) der Aussparung (6) übergreift.

18. Bestrahlungsgerät nach Anspruch 17, dadurch gekennzeichnet, daß sich an den Rand der Einbettform (11) eine Rinne (44) anschließt.

19. Bestrahlungsgerät nach Anspruch 18, dadurch gekennzeichnet, daß der äußere Rinnenrand (46) den inneren Rinnenrand (47) überragt.

20. Bestrahlungsgerät nach einem der Ansprüche 14 bis 19, dadurch gekennzeichnet, daß die Einbettform (11) zumindest im Bodenbereich (40) eine Wanddicke (51) von 0,5 bis 1 mm aufweist.

21. Bestrahlungsgerät nach einem der Ansprüche 14 bis 20, dadurch gekennzeichnet, daß die Einbettform (11) eine Höhe (52) von 5 bis 15 mm aufweist.

22. Bestrahlungsgerät nach einem der Ansprüche 14 bis 21, dadurch gekennzeichnet, daß die Einbettform (11) nach außen geneigte, an seinen Boden (40) angrenzende Seitenflächen (41) aufweist.

23. Bestrahlungsgerät nach Anspruch 22, dadurch gekennzeichnet, daß der Neigungs-Winkel (42) der Seitenflächen (41) zu der auf dem Boden (40) der Einbettform (11) stehenden Lotrechten 5 bis 30° beträgt.

24. Bestrahlungsgerät nach einem der Ansprüche 14 bis 23, dadurch gekennzeichnet, daß die Dicke (53) des Drehtellers (5) zumindest im Bereich der Ausparungen (6) 3 bis 5 mm beträgt.

25. Bestrahlungsgerät nach einem der Ansprüche 14 bis 24, dadurch gekennzeichnet, daß die Einbettform (11) über einen Adapter (54) auf den Rand (28) der Aussparungen (6) des Drehtellers (5) aufgesetzt ist.

26. Bestrahlungsgerät nach einem der Ansprüche 14 bis 25, dadurch gekennzeichnet, daß die Einbettform (11) aus Acrylglas oder Polyvinylchlorid besteht und mindestens auf der Innenseite seines Bodens (40) eine Trennschicht (50) aufweist.

27. Bestrahlungsgerät nach Anspruch 26, dadurch gekennzeichnet, daß die Trennschicht (50) durch eine dünne Folie, vorzugsweie eine Polyethylen-Folie, gebildet ist.

28. Bestrahlungsgerät nach Anspruch 27, dadurch gekennzeichnet, daß die Folie eine Dicke von 5 bis 50 μm aufweist.

FIG.1

0 281 668

FIG. 2

FIG. 3

0 281 668

FIG. 4

FIG. 5

0 281 668

FIG. 6

FIG. 7

0 281 668

X

IX                                          IX

45        45

46

43

X

FIG. 8

49

46    43    45        45    43

54

44

FIG. 9

FIG.10

FIG.11